# EUROPEAN PATENT SPECIFICATION

(11) **EP 4 235 470 B1**
(45) Date of publication and mention of the grant of the patent: **31.07.2024**
(21) Application number: 22164512.0
(22) Date of filing: 25.03.2022
(51) Int. Cl.: G06F 9/455, H04L 9/40, G06F 21/56

(54) **METHOD AND NETWORK COMPONENT FOR PROTECTING NETWORKED INFRASTRUCTURES**
VERFAHREN UND NETZWERKKOMPONENTE ZUM SCHUTZ VON VERNETZTEN INFRASTRUKTUREN
PROCÉDÉ ET COMPOSANT DE RÉSEAU POUR LA PROTECTION DES INFRASTRUCTURES EN RÉSEAU

(43) Date of publication of application: 30.08.2023
(73) Proprietor: ZOE Life Technologies AG, 9100 Herisau (CH)
(72) Inventor: Schloer, Hardy, 80331 München (DE)
(74) Representative: Reich, Jochen

(56) References cited:
- WO-A1-2018/044410
- US-B1- 8 898 788
- US-B2- 10 091 238

## Description

The present invention is directed towards a method, a network component and a system arrangement that allow the detection of intrusion attempts such that the attacker, or in case of joint attacks the attackers, is not aware that the malicious access is detected by the targeted system. Instead, the targeted system keeps offering services and is able to gather more information about the intruders. The present invention allows the establishment of global attack signature databases which can be provided to several target systems which enables the global prevention of fraudulent data access and system intrusions. For doing so the present invention suggests to provide a fake infrastructure dynamically at runtime which communicates with the external computing devices thereby protecting the requested infrastructure in a sandbox. The present invention is furthermore directed towards a computer program product and a computer-readable medium having stored thereon the computer program.

EP 2 555 486 B1 shows a method comprising receiving, at a network device, a packet; inspecting, by the network device, the packet to determine whether the packet includes information indicative of a security breach and further more.

EP 1 470 691 B1 shows systems and techniques relating to network intrusion detection, for example, integrated network intrusion detection.

EP 2 562 986 B1 shows systems and methods for enhancing security associated with electronic communications. More specifically, without limitation, the present invention relates to computer-based systems and methods for assessing security risks associated with electronic communications transmitted over a communications network.

US 8,898,788 B1 shows systems and methods for malware attack prevention where network data is copied from a communication network.

US10,091 ,238 B2 shows methods and systems for deception using distributed threat detection.

It is commonly known that attackers try to detected security gaps in systems and thereby use specific attack signatures such as scanning ports or guessing passwords at high frequency. Typically these attacks are repeated in great numbers and the attacker immediately receives feedback that the attempt was not successful. This motivates an attacker such as a bot the trigger the next attempt until the successful intrusion into a target system is reached.

It is commonly known to implement firewalls and similar network components which deny access to a target infrastructure. It is also known to block ports or implement access rights. However, there is also a huge number of successful intrusions which is to be prevented in any case.

There is a need for improved techniques that allow a global approach for preventing attacks the consistently improves knowledge about attack signatures and especially does not provide the attacker with information on how the attack performed and if it was successfully accomplished. Moreover, there is a need to react to previously not experienced attacks as typically dynamic attacks evolve over time and the initial attack might be hidden such that the interaction of several steps leads to malicious data access and manipulation. Hence, it is not enough to evaluate an attack before accessing the system and then blocking the attack or providing access in case of a trusted request. Attacks need to be evaluated at runtime to see how they perform in praxis and trigger counter measures.

Accordingly it is an object of the present invention to provide a method and a network component for securing an infrastructure in a computer network against malicious attacks that operates at runtime and evaluates the complete attack signature even in case of joint attacks where several attackers threaten an infrastructure. It is also an object of the present invention to provide a network component being designed in accordance with the suggested method. Moreover, it is an object of the present invention to provide a respectively arranged computer program product and a computer-readable medium.

The invention is defined in the independent claims. Further advantages are provided by the dependent claims.

Accordingly, a method for securing an infrastructure in a computer network against malicious attacks is suggested, comprising receiving network session information from at least one computing device over a computer network, the network session information containing computing instructions to be performed in a requested infrastructure; characterized by scanning the requested infrastructure and emulating the requested infrastructure; executing a duplicated network session information using the emulated infrastructure and recording the execution of the computing instructions in said emulated infrastructure, wherein the duplicated network session information is assigned a new identifier and the new network session information is addressed using the new identifier and the original network session information remains in a secured area; storing the duplicated network session and the execution of the computing instructions as a signature information and comparing this signature information with previously established signature information, the previously established signature information being stored as a function of data transmissions from several computing devices and data transmissions to several requested infrastructures, thereby computing a security index; and executing the computing instructions in the requested infrastructure as a function of the security index.

Securing an infrastructure in a computer network against malicious attacks is performed by hiding the actual requested infrastructure and simulating the actual infrastructure by means of a cloned infrastructure preferably the actual infrastructure. The requested infrastructure is rebuilt by means of software and/ or hardware and presented to the user or users namely the requesting devices. In this way the attacker is merely able to attack a dummy or cloned infrastructure. This means that not necessarily the data of the actual infrastructure is to be presented but a fake infrastructure offering fake data. Fake data generally means that random data or previously prepared data is represented. Hence, instructions performed on the emulated infrastructure provides the impression that the actual infrastructure is present but instructions access not the original data sets. In this way manipulations and intrusions are performed on duplicated data sets and environments. The emulated infrastructure may return parameters or accomplish tasks on the cloned environment which avoids harm on the actual infrastructure.

Receiving network session information from at least one computing device over a computer network is performed using an interface or gateway such that external computing devices can transmit information or request data for instance over the internet. The network session is triggered by external devices under usage of network components. The at least one computing device may launch attacks individually or as a group by transmitting malicious data or requests. The attacked system receives such network session information and responds using the emulated infrastructure.

Among known information the network session information contains computing instructions to be performed in the requested infrastructure such as functions which optionally transmit parameters. In case the computing instructions request data fake data is returned and in case a change of the target system is requested this can be performed at least in a similar way as the actual infrastructure does. The actually requested infrastructure is guarded meaning secured from the emulated infrastructure such that no harm can occur and the computing instructions are executed in a sandboxed system.

For doing so scanning the requested infrastructure is performed such that the emulated infrastructure obtains information on how to behave meaning how to accomplish requested tasks and what an intruder expects from the targeted system. In this the user obtains no knowledge about the actual infrastructure but an emulated system is offered which behaves the same. This does not necessarily mean that the emulated infrastructure and the actual infrastructure are identical but at least the scanning reveals how the requested infrastructure shall perform. Hence, the emulated and actual infrastructure behave the same without providing the same hardware, software or data. The scanning of the infrastructure makes sure that the method can be performed at runtime and the emulation can take place dynamically.

Emulating the requested infrastructure may comprise providing the same or similar hardware, software or data my means of techniques such as virtualization of hardware or providing same or similar software components and interfaces. Emulating means to provide the expected behavior but not necessarily providing the same hardware, software or data. Any means that provides the expected behavior is suitable in case it offers the same or similar behavior as the actual target infrastructure. Behavior means any observable parameters from the outside for instance response time, functionality, return values and the further more.

Executing a duplicated network session information using the emulated infrastructure is accomplished by cloning the request and handling this specific request. Hence, the originally filed network session information is sandboxed and cannot intrude the requested infrastructure. The originally filed network session information is only accomplished in case the cloned network session information is evaluated and the index is computed.

For identifying and tracking malicious attacks recording the execution of the computing instructions in said emulated infrastructure is performed. In this way the network session information along with the execution of instructions can be observed in action without risking the security of the actual infrastructure. Recording means storing parameters such as executed instructions, return values, response times, change of system states and the further more. In this way any information based on the network session information and instructions is gathered such that an evaluation of the external device or devices is feasible.

For further evaluation purposes storing the duplicated network session and the execution of the computing instructions as a signature information is performed and moreover comparing this signature information with previously established signature information is accomplished such that already recorded attacks can be compared to an existing behavior such that an assumption can be drawn if the recorded behavior equals an attack. For this purpose attacks can be classified as such by human users or based on meta data describing attacks. For instance in case the execution of instructions lowers response times by a specific factor a denial of service attack may be present. In case external computing devices request the same information or in general information at high frequency and the system performance for further tasks goes down it can be detected that the infrastructure is spammed. In case the external computing device gains access to confidential information this can be classified as an attack. Hence, rules can be stored and exemplary attacks. The rules describe behavior that classifies one are several data requests as attacks. In this way a holistic view on a general request performed by several external computing devices can likewise be detected. As at least one external computing device is evaluated also joint attacks by several bots can be identified.

For evaluation purposes computing a security index is performed that describes a distance between the actual behavior and malicious behavior. In case the similarity is above a predefined threshold the network session information and instructions are classified as attacks. The measured behavior can for instance be described by parameters which are arranged in a multi-dimensional data space which allows the comparison and hence the calculation of an index.

Finally executing the computing instructions in the requested infrastructure as a function of the security index is performed in case the index reveals that there is no attack. In case the behavior is classified as an attack the requested infrastructure may terminate the session or instruct the emulated infrastructure to continue its service such that the intruder is provided with further service and does not notice that the targeted system is exchanged by an emulated fake infrastructure. Moreover the requested infrastructure can be operated but with limited functionality such that the attack is no longer able to trigger specific operations. The requested infrastructure by then knows about the attack and responds accordingly. The requesting computing device has only limited rights and obtains only limited hardware and/ or software resources. Also the data sets may be limited. The address of the attacker may be stored and also excluded from further requests.

According to an aspect of the present invention executing the computing instructions in the requested infrastructure comprises accomplishing at least one action of a group of actions the group comprising blocking the at least one computing device, restricting access of the computing device, recording incoming requests from the computing device, further execution of the emulated infrastructure, requesting further information from the computing device and executing predefined response commands. This provides the advantage that the requested infrastructure can act in response to an attack and block the intruder of even continue to operate the emulated infrastructure such that the attacker or attackers do not even notice that the attack is discovered. Moreover the attacking computing devices can be monitored and further data about them can be gathered in order to learn more about the attackers and their intrusion strategies. In this way the attack signatures can be learned and used for further intrusion detection. Moreover a global data base of attack signatures can be created such that all global attacks are monitored and stored for their future detection.

According to a further aspect of the present invention the duplicated network session information is assigned a new identifier. This provides the advantage that the new identifier guards the original network session information can be left unused and no harm can be done. The new network session information is addressed using the new identifier and hence the original network session information remain in a secured area and does not affect the emulation of the duplicated network session information and instructions.

According to a further aspect of the present invention the network session information comprises an IP address, a National identification number, a computing device identifier, a port number, a time stamp and/ or a network session data packet. This provides the advantage that the attacker or the attackers in case of a joint attack can easily be identified and further information about them can be stored. This allows the attacked infrastructure to block the attacker or acquire additional information. Moreover the attack can be examined such that the specific behavior is detected like scanning ports. In case a number of ports is scanned by the external at least one computing device this can be classified as an attack or the scanning of security leaks. This is an abnormal behavior and the requesting entity can be blocked or merely allowed access to the emulated infrastructure.

According to a further aspect of the present invention emulating the requested infrastructure comprises an imitation of hardware behavior, an imitation of software behavior, virtualization, an imitation of data base behavior, providing predefined data sets, providing predefined functionality and/ or an imitation of an infrastructure configuration. This provides the advantage that any kind of infrastructure can be presented to the attacker without the possibility for them to identify the protection of the actual infrastructure. Any data, hardware and/ or software can emulate the requested infrastructure and thereby provide and offer the requested behavior. This does not mean that the requested and the emulated infrastructure are the same but rather they behave the same from the perspective of the requesting computing units. This might require additional steps such that after scanning the infrastructure the infrastructure configuration is changed or software, hardware and/ or data sets are changed and that a similar or the same behavior is provided. The emulation may take place to that effect that all visible parameters from the outside are emulated but the internal structure of the emulated infrastructure must not necessarily be the same as the requested infrastructure.

According to a further aspect of the present invention the requested infrastructure and the emulated infrastructure are secured, separately operated, operated on different hardware components, operated on different software components and/ or restricted in their mutual data exchange. This provides the advantage that the requested infrastructure and the emulated infrastructure are disconnected in a way that any execution of control instructions in the emulated infrastructure cannot harm the requested infrastructure. Hence, only fake data is provided and instructions can only change system parameters and configurations of the emulated infrastructure. After execution of the session using the instructions the record is evaluated and only with a positive index the instructions are executed by the requested infrastructure.

According to a further aspect of the present invention the previously established signature information is stored as a function of data transmissions from several computing devices and data transmissions to several requested infrastructures. This provides the advantage that joint attacks can be identified as such and that targeted infrastructures can share their knowledge about attacks. Hence, previously attacked systems can share their detected attack signatures with other infrastructures so they can identify the same attacks even in case they were not under attack before.

According to a further aspect of the present invention comparing the signature information is performed based on at least one predefined similarity function. This provides the advantage that in a preliminary step rules are created and/ or imported that describe attacks and how they are measured. Existing data bases describe such behavior and hence attacks can be measured. Examples are port scans or repeated requests to claim hardware resources and lower response times. Parameters can be arranged in a multi-dimensional data space and hence clustering functions can detect if a specific signature falls within an attack cluster. Moreover sequences of instructions can be listed that are typically performed during attacks. Computing devices can be checked by their address and ports.

According to a further aspect of the present invention the security index indicates a security risk, a violation of an access right, addressed components and/ or an identifier. This provides the advantage that a measurement is provided that allows the evaluation of the risk in terms of an index. Hence, a threshold can be identified which serves as basis for the evaluation. In case a specific threat level is reached the behavior can be classified as an attack.

According to a further aspect of the present invention the emulated infrastructure is reconfigured according to stored configurations. This provides the advantage that the actual infrastructure is not cloned but rather a similar infrastructure is provided offering the same behavior. Once the attack is in progress the emulated infrastructure can be amended to misguide the attacker.

According to a further aspect of the present invention scanning the infrastructure is performed by reading out an infrastructure description from a storage. This provides the advantage that predefined systems are created which can be offered to the attacker such that no conclusions can be drawn on the requested infrastructure. For instance in case the target infrastructure is a server system a server system configuration is provided. In case the target infrastructure is a mobile device the mobile device infrastructure is provided by the emulation.

The object is also solved by a network component or a system arrangement for securing an infrastructure in a computer network against malicious attacks, comprising an interface unit arranged to receive network session information from at least one computing device over a computer network, the network session information containing computing instructions to be performed in a requested infrastructure; characterized by an emulation unit arranged to scan the requested infrastructure and emulate the requested infrastructure; a processing unit arranged to execute a duplicated network session information using the emulated infrastructure and record the execution of the computing instructions in said emulated infrastructure, wherein the duplicated network session information is assigned a new identifier and the new network session information is addressed using the new identifier and the original network session information remains in a secured area; an indexing unit arranged to store the duplicated network session and the execution of the computing instructions as a signature information and compare this signature information with previously established signature information, the previously established signature information being stored as a function of data transmissions from several computing devices and data transmissions to several requested infrastructures, thereby computing a security index; and an execution unit arranged to execute the computing instructions in the requested infrastructure as a function of the security index.

The object is also solved by a computer program product comprising instructions to cause the arrangement to execute the steps of the method as well by a computer-readable medium having stored thereon the computer program.

It is of special advantage that the method as suggested above can be executed using structural features of the suggested device and control unit. Accordingly the method teaches steps which are arranged to operate the suggested device. Furthermore, the device comprises structural features allowing the accomplishment of the suggested method. In addition a computer program and a computer program product respectively is suggested comprising instruction which perform the suggested method when executed on a computer or the device according to the present invention. Furthermore, the instructions provide means for implementing the structural features of the claimed device. Accordingly an operable image of the structural features of the device can be created. Likewise an arrangement comprising the structural device features is provided.

Wherever, structural features are provided they can likewise be established virtually thereby creating a virtual instance of physical structures. For instance a device can likewise be emulated. It may be the case that single sub steps are known in the art but the overall procedure still delivers a contribution in its entireness.

Further advantages, features and details of the invention emerge from the following description, in which aspects of the invention are described in detail with reference to the drawings. The features mentioned in the claims and in the description can each be essential to the invention individually or in any combination. The features mentioned above and those detailed here can also be used individually or collectively in any combination. Functionally similar or identical parts or components are in some cases provided with the same reference symbols. The terms "left", "right", "top" and "bottom" used in the description of the exemplary aspects relate to the drawings in an orientation with normally legible figure designation or normally legible reference symbols. The aspects shown and described are not to be understood as conclusive, but are exemplary for explaining the invention. The detailed description is provided for the information of the person skilled in the art; therefore, in the description, known circuits, structures and methods are not shown or explained in detail in order not to complicate the understanding of the present description. The invention will now be described merely by way of illustration with reference to the accompanying figures, which show:
- Figure 1:: a flow chart of the method for securing an infrastructure in a computer network against malicious attacks according to an aspect of the present invention;
- Figure 2:: a system architecture of a component or system arrangement for securing an infrastructure in a computer network against malicious attacks according to an aspect of the present invention; and
- Figure 3:: a further system architecture of a component or system arrangement for securing an infrastructure in a computer network against malicious attacks according to an aspect of the present invention.

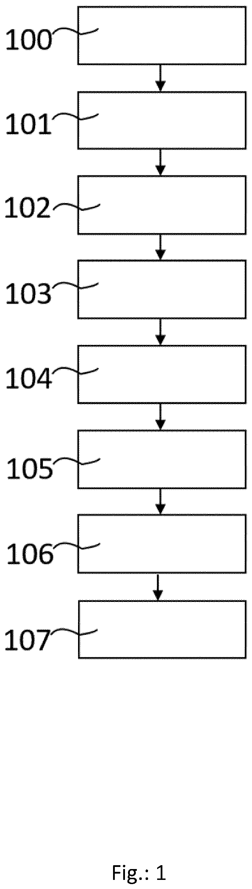

Figure 1 shows a method for securing an infrastructure in a computer network against malicious attacks, comprising receiving 100 network session information from at least one computing device over a computer network, the network session information containing computing instructions to be performed in a requested infrastructure; characterized by scanning 101 the requested infrastructure and emulating 102 the requested infrastructure; executing 103 a duplicated network session information using the emulated infrastructure and recording the execution of the computing instructions in said emulated infrastructure, wherein the duplicated network session information is assigned a new identifier and the new network session information is addressed using the new identifier and the original network session information remains in a secured area; storing 104 the duplicated network session and the execution of the computing instructions as a signature information and comparing 105 this signature information with previously established signature information, the previously established signature information being stored as a function of data transmissions from several computing devices and data transmissions to several requested infrastructures, thereby computing 106 a security index; and executing 107 the computing instructions in the requested infrastructure as a function of the security index.

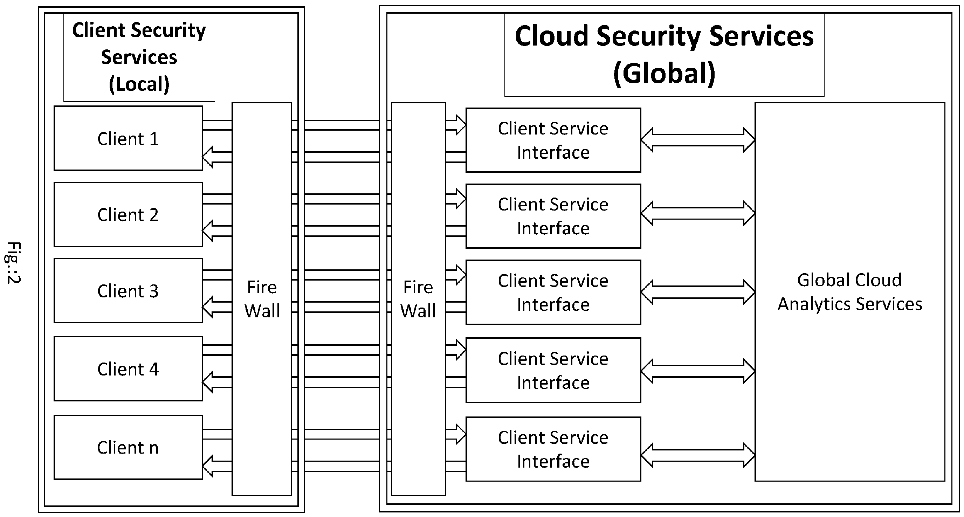

Figure 2 shows the architecture in which the suggested network component is embedded. Given current cyber security problems, intensified by geopolitical tension and often adversarial global interconnectedness, Cyber Security must go into the next stage of defense, taking full advantage of modern Cloud technologies, IT architectures and the convenience of Major global Cloud Service providers, which can sample intrusion information, for example from Cyber Attacks, from thousands of clients, analyze their behaviors, there identifiable technical elements such as IP numbers, NIC numbers, and automated (but also manual) typical intrusion behaviors, record them by exact date and time, and analyze similarities in type of attacks, sequential characteristics, and types of software tools used in the attack.

This invention proposes an architecture, whereby a cloud service provider installs a security environment (hardware and/ or software) at the client domain (Client Security Services), consisting of components to receive and hold an incoming session from an external web interface, split such session into an old (original) and an independent new session, send the new session into an upper security layer for further processing. In addition, keep the old session inside a holding module, awaiting the new session coming back to "wake up" the old (original) session, and send the old session back to the waiting user at the external web interface together with the user requested dynamic content from the upper security layers.

During the time, the upper session is completing the upper task, to prepare content for the user, the old (original) session is parked in a holding module, which exposes the session also to a dynamic Sandbox (honey pot) which is called in this architecture "Sin City". A normal User will not interact with Sin City, but only wait for his content. A malicious user (Hacker) or Cyber Criminal will "explore" his environment, to penetrate the system and find valuable data to take, or to attack the computational assets. Sin City is faking a dynamically changing and active IT environment with application servers, databases, user interaction and communication between the components. All this activity is created by the Sin City AI software, which will create a random fake transaction environment consistent with the actual type of business, the domain is managing (for example a Hospital, Bank, Power Plant, Commercial Site, etc.).

The hacker or Cyber Attacker will find a prolific environment to steal fake data, brake into fake servers, and destroy fake infrastructures. In all these activities, the attacker is observed, and all his moves are recorded, together with his digital footprint (IP numbers, NIC numbers, etc.), by the cloud client system (operated by the Cyber Fortress Operator) to establish a "Behavior Signature" of the attacker and the tools he uses to penetrate the Sin City environment.

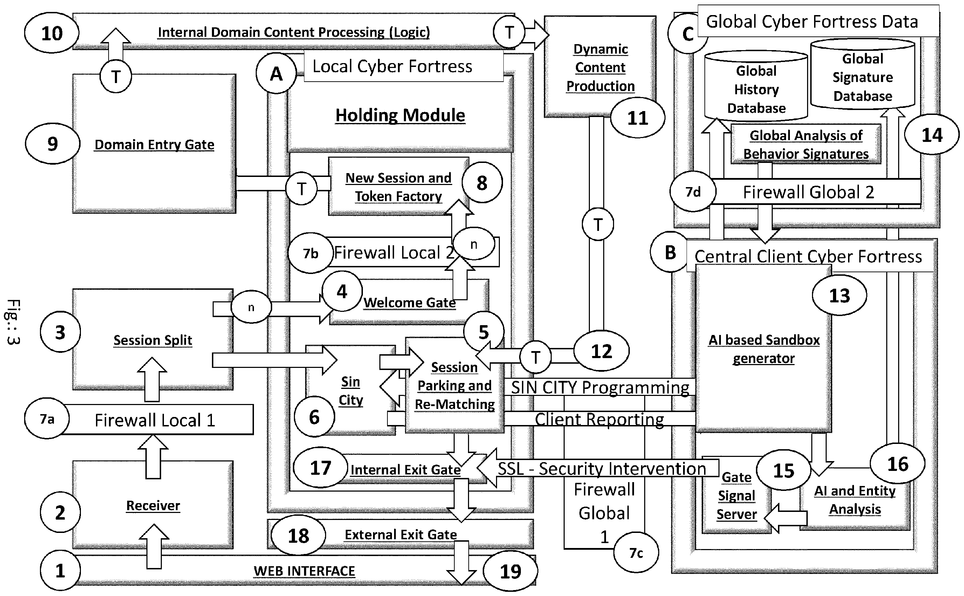

Figure 3 shows a system arrangement in which the suggested network component is embedded. The present invention is also directed towards the suggested architecture and system arrangement.

If the user request comes from a regular user without malicious intensions, he will sit in the session Parking and Re-Matching environment, till he is woken up by the dynamic content production, and receive its normal intended content through the web-interface.

However the recorded behavior of the cyber attacker is not only recorded by Sin City, but also reported on a secure connection to the AI based Sandbox generator, which will analyze the information, and if need to be, cancel the original session in the webserver, to protect the system and its content to be sent to a suspect user (Hacker). At the same time the Sandbox generator inside the client is continuously re-programming the dynamic Sin City, to change its appearance and status, to optimize its cover to not be revealed by the efforts of the hacker (attacker)

The Global Central Cyber Fortress system (C) is collecting from all client systems all interactions with all attackers. This information is recorded, analyzed and used in global early attacker detection, to warn and, if need to be, to intercept on client systems early stages of attacks, before they can harm the client system.

### Components

1. Web interface
   Classical, regular web interface for external user requests
2. Receiver (convertor): Protocol convertor if any conversion is desired.
3. Session splitter/ Clone Device: Software component that splits the session into a upper and a lower layer. The lower layer maintains
4. Welcome gate
5. Session parking and re-matching: Software component responsible for keeping
6. Sin City Component: Sandboxed intelligent honey pot like component that detects any malicious activity and reports it.
7. Firewalls
   Regular software or hardware firewalls
8. New session and token factory: Software component that generates new tokens and attaches them to the previously duplicated session.
9. Domain entry gate
10. Internal domain content processing (logic): Client specific production infrastructure
11. Dynamic content production: Client specific content unifier and delivery infrastructure
12. Connector! Interface
13. AI based Sandbox generator
14. Global analysis of behavior signatures: Intelligent component that continuously learns about malicious types of behavior. It uses the data collected globally from all Central Client Cyber Fortresses.
15. Gate signal server
16. AI and entity analysis component: Machine learning component that analyses the reported malicious behavior, defines the signatures and sends it to the Global Signatures Databases
17. Internal exit gate
18. External exit gate

### General description of workflow

A session is created at user's request through 1. If any protocol conversion is needed is done in by 20. The session is duplicated/split by 3. One A is sent to 4 and one B goes to 6.

### (A) Session flow

A token is generated and attached to the session by 8 and is sent to the 9. Then content is generated (client production infrastructure) 10, 11.Session is re-matched with the parked (original) (B) session. Then through 17 it goes to 18 and back to the user trough 1

### (B) Session flow

Session is parked in 5 and waiting for 6 to detect or not any malicious behavior. If no malicious behavior is detected then it waits for (A) to be completed and then they are rematched by 5 and follows the workflow at (A)

If malicious behavior is detected then:
- (A) session is killed/ terminated
- Activity is recorded in GLOBAL history Database
- (B) goes to 17, 18, 1 returning an error message
- Behavior is reported by 6 to 13
- 16 analyses behavior, and sends the behavior signature to Global Behavior Signature Database

## Claims

1. A method for securing an infrastructure in a computer network against malicious attacks, comprising:
- receiving (100) network session information from at least one computing device over a computer network, the network session information containing computing instructions to be performed in a requested infrastructure;
- scanning (101) the requested infrastructure and emulating (102) the requested infrastructure;
- executing (103) a duplicated network session information using the emulated infrastructure and recording the execution of the computing instructions in said emulated infrastructure, wherein the duplicated network session information is assigned a new identifier and the duplicated network session information is addressed using the new identifier and the original network session information remains in a secured area and is left unused;
- storing (104) the duplicated network session and the execution of the computing instructions as a signature information and comparing (105) this signature information with previously established signature information, the previously established signature information being stored as a function of data transmissions from several computing devices and data transmissions to several requested infrastructures, thereby computing (106) a security index; and
- executing (107) the computing instructions in the requested infrastructure as a function of the security index.

2. The method according to claim 1, wherein executing the computing instructions in the requested infrastructure comprises accomplishing at least one action of a group of actions the group comprising: blocking the at least one computing device, restricting access of the computing device, recording incoming requests from the computing device, further execution of the emulated infrastructure, requesting further information from the computing device and executing predefined response commands.

3. The method according to any one of the preceding claims, wherein the network session information comprises an IP address, a National identification number, a computing device identifier, a port number, a time stamp and/ or a network session data packet.

4. The method according to any one of the preceding claims, wherein emulating the requested infrastructure comprises an imitation of hardware behavior, an imitation of software behavior, virtualization, an imitation of data base behavior, providing predefined data sets, providing predefined functionality and/ or an imitation of an infrastructure configuration.

5. The method according to any one of the preceding claims, wherein the requested infrastructure and the emulated infrastructure are secured, separately operated, operated on different hardware components, operated on different software components and/ or restricted in their mutual data exchange.

6. The method according to any one of the preceding claims, wherein comparing the signature information is performed based on at least one predefined similarity function.

7. The method according to any one of the preceding claims, wherein the security index indicates a security risk, a violation of an access right, addressed components and/ or an identifier.

8. The method according to any one of the preceding claims, wherein the emulated infrastructure is reconfigured according to stored configurations.

9. The method according to any one of the preceding claims, wherein scanning the infrastructure is performed by reading out an infrastructure description from a storage.

10. The method according to any one of the preceding claims, wherein the emulated infrastructure provides randomly created data

11. A network component for securing an infrastructure in a computer network against malicious attacks, comprising:
- an interface unit arranged to receive (100) network session information from at least one computing device over a computer network, the network session information containing computing instructions to be performed in a requested infrastructure;
- an emulation unit arranged to scan (101) the requested infrastructure and emulate (102) the requested infrastructure;
- a processing unit arranged to execute (103) a duplicated network session information using the emulated infrastructure and record the execution of the computing instructions in said emulated infrastructure, wherein the duplicated network session information is assigned a new identifier and the duplicated network session information is addressed using the new identifier and the original network session information remains in a secured area and is left unused;
- an indexing unit arranged to store (104) the duplicated network session and the execution of the computing instructions as a signature information and compare (105) this signature information with previously established signature information, the previously established signature information being stored as a function of data transmissions from several computing devices and data transmissions to several requested infrastructures, thereby computing (106) a security index; and
- an execution unit arranged to execute (107) the computing instructions in the requested infrastructure as a function of the security index.

12. A computer program product comprising instructions to cause the arrangement of claim 11 to execute the steps of the method of any one of claims 1 to 10.

13. A computer-readable medium having stored thereon the computer program of claim 12.

## Patentansprüche

1. Verfahren zum Sichern einer Infrastruktur in einem Computernetz gegen bösartige Angriffe, umfassend:
- Empfangen (100) von Netzsitzungsinformationen von mindestens einer Rechenvorrichtung über ein Computernetz, wobei die Netzsitzungsinformationen Rechenanweisungen enthalten, die in einer angeforderten Infrastruktur auszuführen sind;
- Scannen (101) der angeforderten Infrastruktur und Emulieren (102) der angeforderten Infrastruktur;
- Ausführen (103) einer duplizierten Netzsitzungsinformation unter Verwendung der emulierten Infrastruktur und Aufzeichnen der Ausführung der Rechenbefehle in der emulierten Infrastruktur, wobei der duplizierten Netzsitzungsinformation ein neuer Bezeichner zugewiesen wird und die duplizierte Netzsitzungsinformation unter Verwendung des neuen Bezeichners adressiert wird und die ursprüngliche Netzsitzungsinformation in einem gesicherten Bereich verbleibt und unbenutzt gelassen wird;
- Speichern (104) der duplizierten Netzwerksitzung und der Ausführung der Rechenanweisungen als Signaturinformation und Vergleichen (105) dieser Signaturinformation mit zuvor erstellter Signaturinformation, wobei die zuvor erstellte Signaturinformation in Abhängigkeit von Datenübertragungen von mehreren Rechenvorrichtungen und Datenübertragungen an mehrere angeforderte Infrastrukturen gespeichert wird, wodurch ein Sicherheitsindex berechnet wird (106); und
- Ausführen (107) der Rechenbefehle in der angeforderten Infrastruktur in Abhängigkeit vom Sicherheitsindex.

2. Verfahren nach Anspruch 1, wobei das Ausführen der Rechenbefehle in der angeforderten Infrastruktur das Durchführen mindestens einer Aktion aus einer Gruppe von Aktionen umfasst, wobei die Gruppe Folgendes umfasst: Blockieren der mindestens einen Rechenvorrichtung, Einschränken des Zugriffs auf die Rechenvorrichtung, Aufzeichnen eingehender Anfragen von der Rechenvorrichtung, weitere Ausführung der emulierten Infrastruktur, Anfordern weiterer Informationen von der Rechenvorrichtung und Ausführen vordefinierter Antwortbefehle.

3. Verfahren nach einem der vorhergehenden Ansprüche, wobei die Netzwerksitzungsinformationen eine IP-Adresse, eine nationale Identifikationsnummer, eine Kennung für ein Computergerät, eine Portnummer, einen Zeitstempel und/oder ein Netzwerksitzungsdatenpaket umfassen.

4. Verfahren nach einem der vorhergehenden Ansprüche, wobei die Emulation der angeforderten Infrastruktur eine Nachahmung des Hardwareverhaltens, eine Nachahmung des Softwareverhaltens, eine Virtualisierung, eine Nachahmung des Datenbankverhaltens, die Bereitstellung vordefinierter Datensätze, die Bereitstellung vordefinierter Funktionalität und/oder eine Nachahmung einer Infrastrukturkonfiguration umfasst.

5. Verfahren nach einem der vorhergehenden Ansprüche, wobei die angeforderte Infrastruktur und die emulierte Infrastruktur gesichert, getrennt betrieben, auf unterschiedlichen Hardwarekomponenten betrieben, auf unterschiedlichen Softwarekomponenten betrieben und/oder in ihrem gegenseitigen Datenaustausch eingeschränkt sind.

6. Verfahren nach einem der vorhergehenden Ansprüche, wobei der Vergleich der Signaturinformationen auf der Grundlage von mindestens einer vordefinierten Ähnlichkeitsfunktion durchgeführt wird.

7. Verfahren nach einem der vorhergehenden Ansprüche, wobei der Sicherheitsindex ein Sicherheitsrisiko, eine Verletzung eines Zugriffsrechts, adressierte Komponenten und/oder eine Kennung angibt.

8. Verfahren nach einem der vorhergehenden Ansprüche, bei dem die emulierte Infrastruktur entsprechend den gespeicherten Konfigurationen rekonfiguriert wird.

9. Verfahren nach einem der vorhergehenden Ansprüche, wobei das Scannen der Infrastruktur durch Auslesen einer Infrastrukturbeschreibung aus einem Speicher durchgeführt wird.

10. Verfahren nach einem der vorhergehenden Ansprüche, wobei die emulierte Infrastruktur zufällig erzeugte Daten liefert.

11. Netzwerkkomponente zur Sicherung einer Infrastruktur in einem Computernetzwerk gegen bösartige Angriffe, die Folgendes umfasst:
- eine Schnittstelleneinheit, die so beschaffen ist, dass sie Netzsitzungsinformationen von mindestens einem Rechengerät über ein Computernetz empfängt (100), wobei die Netzsitzungsinformationen Rechenbefehle enthalten, die in einer angeforderten Infrastruktur auszuführen sind;
- eine Emulationseinheit, die so angeordnet ist, dass sie die angeforderte Infrastruktur abtastet (101) und die angeforderte Infrastruktur emuliert (102);
- eine Verarbeitungseinheit, die so angeordnet ist, dass sie eine duplizierte Netzwerksitzungsinformation unter Verwendung der emulierten Infrastruktur ausführt (103) und die Ausführung der Rechenbefehle in der emulierten Infrastruktur aufzeichnet, wobei der duplizierten Netzwerksitzungsinformation ein neuer Identifikator zugewiesen wird und die neue Netzwerksitzungsinformation unter Verwendung des neuen Identifikators adressiert wird und die duplizierte Netzwerksitzungsinformation in einem gesicherten Bereich verbleibt und unbenutzt gelassen wird;
- eine Indizierungseinheit, die so angeordnet ist, dass sie die duplizierte Netzwerksitzung und die Ausführung der Rechenbefehle als Signaturinformationen speichert (104) und diese Signaturinformationen mit zuvor erstellten Signaturinformationen vergleicht (105), wobei die zuvor erstellten Signaturinformationen als eine Funktion von Datenübertragungen von mehreren Rechenvorrichtungen und Datenübertragungen an mehrere angeforderte Infrastrukturen gespeichert werden, wodurch ein Sicherheitsindex berechnet wird (106); und
- eine Ausführungseinheit, die so eingerichtet ist, dass sie die Rechenbefehle in der angeforderten Infrastruktur in Abhängigkeit vom Sicherheitsindex ausführt (107).

12. Computerprogrammprodukt, das Anweisungen enthält, um die Anordnung nach Anspruch 11 zu veranlassen, die Schritte des Verfahrens nach einem der Ansprüche 1 bis 10 auszuführen.

13. Computerlesbares Medium, auf dem das Computerprogramm nach Anspruch 12 gespeichert ist.

## Revendications

1. Méthode de sécurisation d'une infrastructure dans un réseau informatique contre les attaques malveillantes :
- réception (100) d'informations de session de réseau provenant d'au moins un dispositif informatique sur un réseau informatique, les informations de session de réseau contenant des instructions de calcul à exécuter dans une infrastructure demandée ;
- l'analyse (101) de l'infrastructure demandée et l'émulation (102) de l'infrastructure demandée ;
- l'exécution (103) d'une information de session de réseau dupliquée à l'aide de l'infrastructure émulée et l'enregistrement de l'exécution des instructions de calcul dans ladite infrastructure émulée, l'information de session de réseau dupliquée se voyant attribuer un nouvel identifiant et l'information de session de réseau dupliquée étant adressée à l'aide du nouvel identifiant, tandis que l'information de session de réseau originale reste dans une zone sécurisée et n'est pas utilisée ;
- stocker (104) la session réseau dupliquée et l'exécution des instructions de calcul en tant qu'informations de signature et comparer (105) ces informations de signature avec des informations de signature précédemment établies, les informations de signature précédemment établies étant stockées en fonction des transmissions de données provenant de plusieurs dispositifs informatiques et des transmissions de données vers plusieurs infrastructures demandées, calculant ainsi (106) un indice de sécurité ; et
- l'exécution (107) des instructions informatiques dans l'infrastructure demandée en fonction de l'indice de sécurité.

2. Méthode selon la revendication 1, dans laquelle l'exécution des instructions de calcul dans l'infrastructure demandée comprend l'accomplissement d'au moins une action d'un groupe d'actions comprenant : le blocage d'au moins un dispositif informatique, la restriction de l'accès au dispositif informatique, l'enregistrement des demandes entrantes du dispositif informatique, la poursuite de l'exécution de l'infrastructure émulée, la demande d'informations supplémentaires au dispositif informatique et l'exécution de commandes de réponse prédéfinies.

3. Procédé selon l'une des revendications précédentes, dans lequel les informations de session réseau comprennent une adresse IP, un numéro d'identification national, un identifiant de dispositif informatique, un numéro de port, un horodatage et/ou un paquet de données de session réseau.

4. Méthode selon l'une des revendications précédentes, dans laquelle l'émulation de l'infrastructure demandée comprend une imitation du comportement du matériel, une imitation du comportement du logiciel, une virtualisation, une imitation du comportement de la base de données, la fourniture d'ensembles de données prédéfinis, la fourniture d'une fonctionnalité prédéfinie et/ou une imitation de la configuration de l'infrastructure.

5. Méthode selon l'une des revendications précédentes, dans laquelle l'infrastructure demandée et l'infrastructure émulée sont sécurisées, exploitées séparément, exploitées sur des composants matériels différents, exploitées sur des composants logiciels différents et/ou restreintes dans leur échange mutuel de données.

6. Méthode selon l'une des revendications précédentes, dans laquelle la comparaison des informations de signature est effectuée sur la base d'au moins une fonction de similarité prédéfinie.

7. Méthode selon l'une des revendications précédentes, dans laquelle l'indice de sécurité indique un risque de sécurité, une violation d'un droit d'accès, des composants adressés et/ou un identifiant.

8. Méthode selon l'une des revendications précédentes, dans laquelle l'infrastructure émulée est reconfigurée en fonction des configurations stockées.

9. Méthode selon l'une des revendications précédentes, dans laquelle l'analyse de l'infrastructure est effectuée en lisant une description de l'infrastructure à partir d'une mémoire.

10. Méthode selon l'une des revendications précédentes, dans laquelle l'infrastructure émulée fournit des données créées de manière aléatoire.

11. Composant de réseau pour sécuriser une infrastructure dans un réseau informatique contre les attaques malveillantes, comprenant :
- une unité d'interface conçue pour recevoir (100) des informations de session de réseau provenant d'au moins un dispositif informatique sur un réseau informatique, les informations de session de réseau contenant des instructions de calcul à exécuter dans une infrastructure demandée ;
- une unité d'émulation conçue pour scanner (101) l'infrastructure demandée et émuler (102) l'infrastructure demandée ;
- une unité de traitement conçue pour exécuter (103) une information de session de réseau dupliquée à l'aide de l'infrastructure émulée et enregistrer l'exécution des instructions de calcul dans ladite infrastructure émulée, dans laquelle l'information de session de réseau dupliquée se voit attribuer un nouvel identifiant et la nouvelle information de session de réseau est adressée à l'aide du nouvel identifiant, et l'information de session de réseau dupliquée reste dans une zone sécurisée et n'est pas utilisée ;
- une unité d'indexation conçue pour stocker (104) la session réseau dupliquée et l'exécution des instructions de calcul en tant qu'informations de signature et pour comparer (105) ces informations de signature avec des informations de signature précédemment établies, les informations de signature précédemment établies étant stockées en fonction des transmissions de données provenant de plusieurs dispositifs informatiques et des transmissions de données vers plusieurs infrastructures demandées, calculant ainsi (106) un indice de sécurité ; et
- une unité d'exécution conçue pour exécuter (107) les instructions informatiques dans l'infrastructure demandée en fonction de l'indice de sécurité.

12. Produit programme d'ordinateur comprenant des instructions pour que l'arrangement de la revendication 11 exécute les étapes de la méthode de l'une des revendications 1 à 10.

13. Support lisible par ordinateur sur lequel est stocké le programme informatique de la revendication 12.
